Europäisches Patentamt

**European Patent Office**

**Office européen des brevets**

(19)

(11) Publication number: **0 066 666**
A2

# EUROPEAN PATENT APPLICATION

(12)

(21) Application number: **82100985.9**

(22) Date of filing: **11.02.82**

(51) Int. Cl.³: **B 29 C 3/00**

(30) Priority: **19.02.81 IT 4681681**
**20.07.81 IT 4686681**

(43) Date of publication of application: **15.12.82**
**Bulletin 82/50**

(84) Designated Contracting States: **AT BE CH DE FR GB LI LU NL SE**

(71) Applicant: **Bonetti, Ariello, Via V.M. Hugo 28,**
**I-42100 Reggio Emilia (IT)**

(72) Inventor: **Bonetti, Ariello, Via V.M. Hugo 28,**
**I-42100 Reggio Emilia (IT)**

(74) Representative: **Lari, Ascanio, Studio Tecnico Brevetti Cav. Uff. Ascanio Lari Vicolo Trivelli, 6 Palazzo di vetro, I-42100 Reggio Emilia (IT)**

(54) **Compression moulding method for thermosetting resins, elastomers in general and natural rubbers, with or without inserts, as well as moulds and presses used with this method.**

(57) This invention pertains to a compression molding technological process, on standing presses and through heated metal molds, of thermosetting resins as well as elastomers in general and natural rubbers.

According to this method, or process, instead of being produced onto the whole piece surface during the matching of the two molds compression pressure operates on the contrary only after they are entirely matched and only on a limited surface of raw materials to be treated and lying in an additional chamber (3) obtained in one of the two half-molds and where the compression pressure is made, for example, by a piston (4).

0066666

COMPRESSION MOLDING METHOD FOR THERMOSETTING RESINS, ELASTOMERS IN GENERAL AND NATURAL RUBBERS, WITH OR WITHOUT INSERTS, AS WELL AS MOLDS AND PRESSES OBTAINED WITH THIS METHOD.

It is well-known that finished products can also be obtained starting from special raw materials, such as thermosetting resins, elastomers, natural rubber. For the time being, these finished products, those resulting from thermosetting resins for instance, are obtained by means of standing presses or, in the case of elastomers in general as well as natural rubber or caoutchou , for example, by injection molding. However, there are practically some cases, for example when pieces to achieve have special shapes and/or should have special features and/or require layers of different materials or compounding of nets/screens, springs, organic fibers or minerals such as fiber glass, expecially long-type, or other inserts where one cannot make use of injection molding but on the contrary it is essential to resort to compression molding, namely with presses.

This invention refers to the well-known compression molding system, which system, in its own essence, consists of a combined action of raw materials heating and compres - sion, as it is common knowledge. This traditional molding system, which is carried out by means of standing presses equipped with heated boards, therefore involves several negative aspects that are still unsolved.

The pieces' thicknesses, for instance, can also vary sensibily from one to the other and,moreover, it is not possible to know such changes immediately so that subsequent pecu liar checks become a necessity.

Such impossibility to maintain thickness constant gives rise to considerable difficulties as to those pieces that must be assembled with others and this is just ow ing to lack of thickness' reliability.

Another serious disadvantage consists in that, owing to unsteadiness in weight-volume ratio of raw materials, one cannot be sure that piece has been really subjected to desired pressure.

Practically, if one won't run the risk of producing wastes due to inadequate amount of raw materials, thus weight of the latter must be essentially increased.

This however gives rise to an expenditure problem, owing to greater weight of raw materials employed and excessive burr output that require subsequent and expensive deburring. Furthermore, presence of raw materials excessively weighing doesn't allow to obtain for certain in the piece some perfect through holes, thus being often necessary to take action also on these holes with subsequent increase in costs.

Another serious inconvenience is the one pertaining to the finished product quality since owing to its unsteadiness in the weight-volume ratio as well as want of raw materials being inserted, polimerization might occur at a pressure lower than the preset, by the operator's possible mistake for instance.

Further grievous disadvantage lies in that, by means the known method, contemporaneous employment of separate molds is almost impossible since besides bringing damages to presses mobile boards and pilot pins, such use causes attainment of even thicknesses throughout the piece perimeter to be impossible and make also impossible keeping compression conditions constant on the whole surface of each piece and among separate molds, all this also resulting from the operators' unavoidable mistakes as well as features of composite products having a variable volume-weight ratio.

Another great but not least disadvantage consists in expensiveness of molds carrying out since it is necessary to create a telescope joint between the two sides of mold, because joining must be accomplished and preserved to perfection and on the whole perimeter concerned. Furthermore, it should be borne in mind that also molds maintenance represents further disadvantage as said joint is prove to quick wear, thus one not only has to arrange for restoring optimum conditions of the joint itself, but one needs also having another pair of molds at one's disposal, otherwise it is absolutely necessary to stop processing till the two sides of molds have been caused to properly match. These, and others, inconveniences lead to deeply unfavourable conditions because, out of technical and use reasons, pieces accomplished do not offer that reliability which is on the contrary essential in mass-production works, entail too high percentage of wastes, this fact being very grievous also because raw materials can not be recycled, end up leading to rather high production costs.

One of the aims of this invention consists in creating a molding method that, while preserving temperature and pressure as basic elements, allows obtaining products well performed as regards thicknesses and pressure firmness and eveness, too.

Another purpose is the one of counting on a reliable method. Another purpose of this invention is the one of reducing wastes to acceptable percentages or quite avoiding them. Further purpose consists in avoiding excessive burrs and eliminating those contingently lying on through holes.

Another aim lies in fulfilling the possibility to employ separate molds simultaneously, thus achieving pieces to perfection.

Further goals consist in taking advantages of much more simple molds both for their design and their maintenance as well as remarkably reducing, in comparison with the one being presently necessary, presses clamping power with further advantage of being able to manufacture presses much less heavy than those being presently employed, with all benefits resulting from this fact.

Aforesaid purposes are achieved by creating in one of the two half-molds one chamber at least where raw material can spread, having the two half-molds to match and keeping them in this way until the end of molding, carrying preset compression pressure only and solely on raw materials lying in the said expansion chamber and only when the two half-molds have been caused to match.

This invention will put itself forward with reference to its accomplishment on a standing press and with the help of the attached table of drawings showing a schematic and not compulsory exemplification of presses carried out by employing this method.

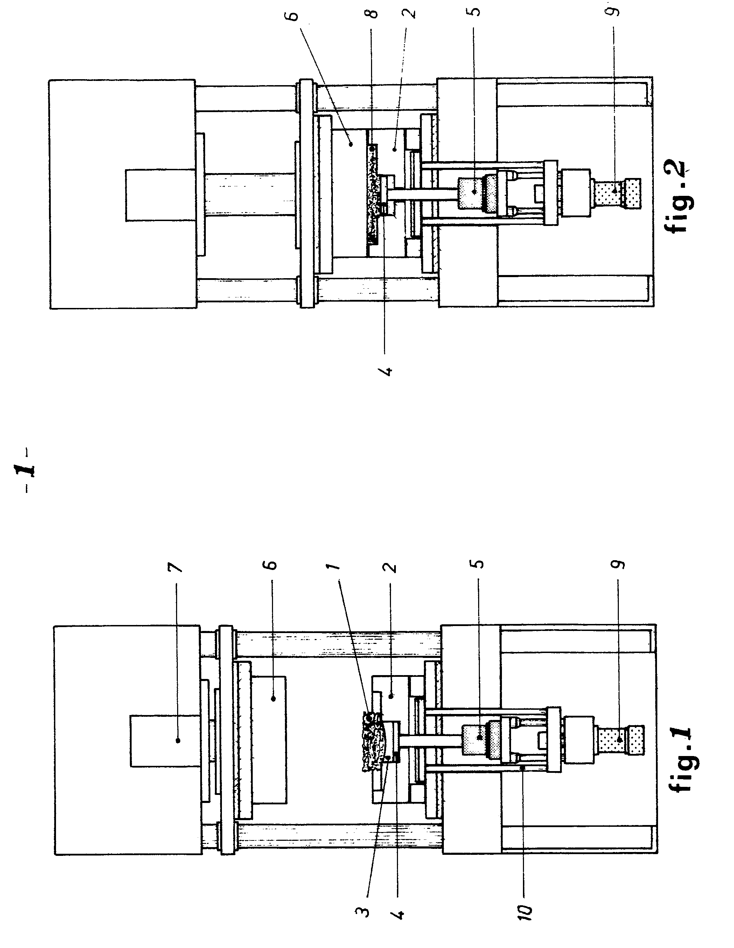

On TABLE I, Fig. 1 shows a standing press, in its open position and in its initial working stage, namely with raw materials, called in jargow "fresh" material, still having to be treated and with the two half-molds in open

- 5 -

position; Fig.2 illustrates the same press when clamp ing is completed and after compression step is accomplished.

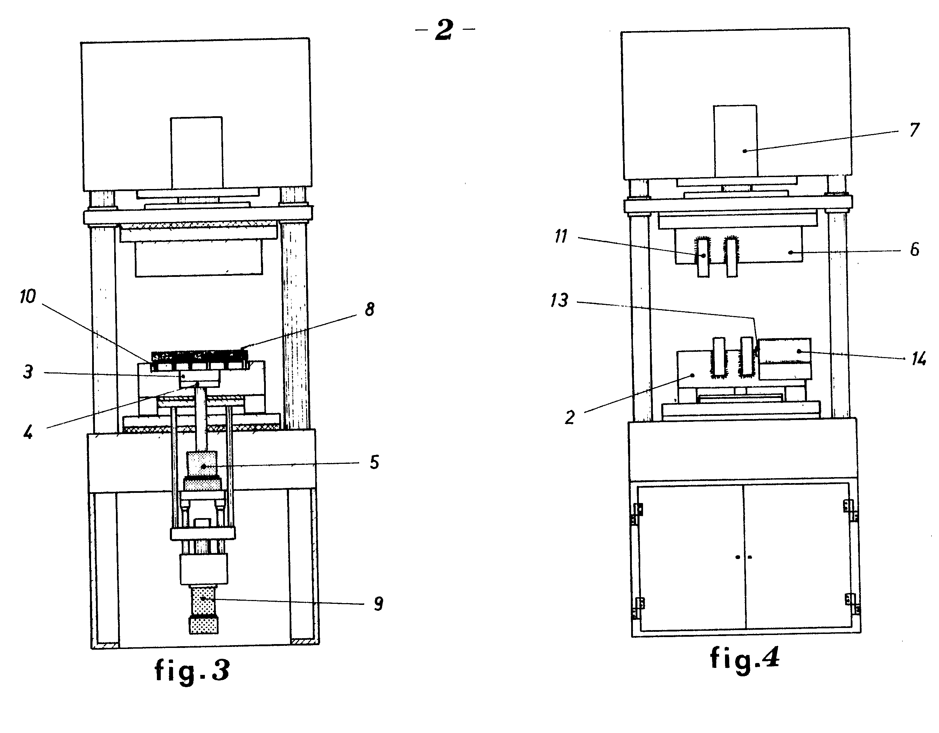

On TABLE II, Fig.3 shows the finished piece at drawing stage while Fig.4 shows a locking system between the two half-molds by pins, with press in its open position.

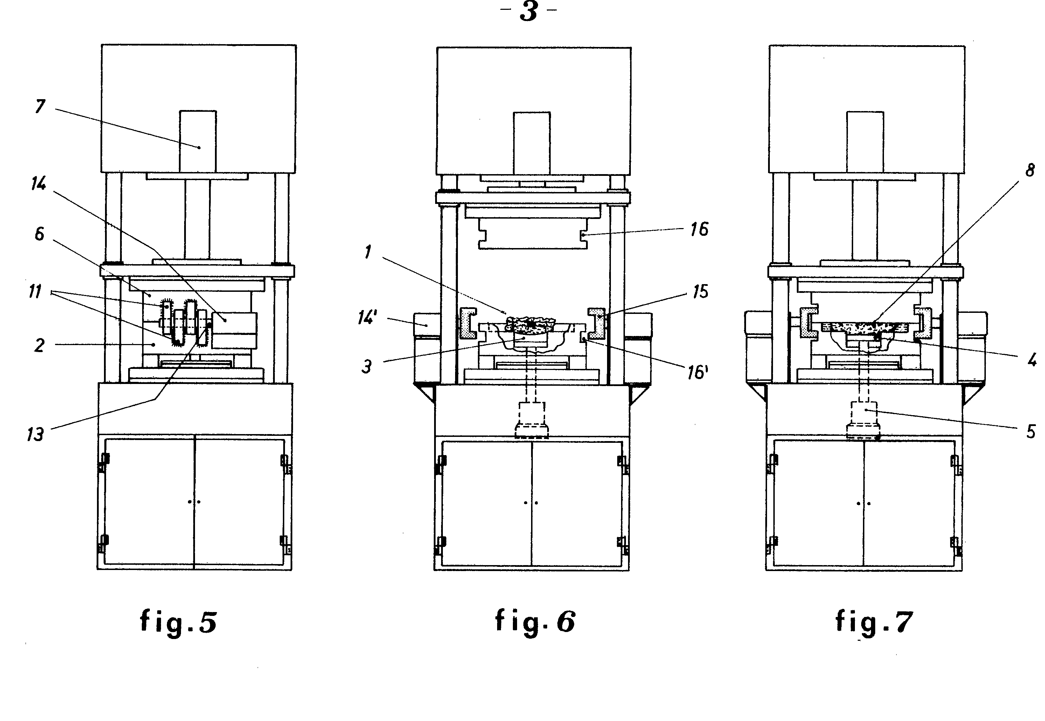

On TABLE III, Fig.5 illustrates the same locking system as Fig.4 but while operating and after the two half-molds have been caused to match; Fig.6 shows a locking system variant consisting of fixed brackets, with press in open position.

Fig.7 shows on the contrary the locking system as per Fig.6 but while operating and after two half-molds have been caused to match.

On them: by 1) is shown raw material from which piece is to be obtained; by 2) one of the two half-molds; by 3) an additional internal cavity, obtained in the said half-mold, preferably lying in the middle of the same and being cylinder-shaped, communicating with cavity of the half-mold itself.

By 4) is shown a piston free to slide tightly lenghtwise in the expansion chamber 3) also till going beyond the bottom board of half-mold cavity, but without reaching the surface of the half-mold corresponding site of 6).

By 5) is shown a pusher, such as a hydraulic jack, thrusting piston 4) with as much force as to create pre set pressure the piece must undergo.

By 6) is shown the other half-mold that is brought closer to that 2) by means of a thrust system, such as hydraulic jack 7).

- 6 -

By 8) is shown the piece already finished while 9) shows hydraulic jack operating the known strippers 10).

By 11) are illustrated some stiff-extensions being firmly fixed to the two half-molds and bearing some cross-holes in which plugs 13) go and connect, these plugs being automatically operated, and subsequently, by any fit control such as oleodynamic, or mechanic, pusher 14) acting in both directions.

By 15) are shown some lip brackets, movable through mechanic or hydraulic control 14'), that go and connect into corresponding cavities 15) and 16') directly obtained in the two half-molds 6) and 2) or on stiff extensions firmly joined to the same.

The press operation according to this invention is as follows: one places in half-mold 2) the amount of raw material supposed sufficient so to obtain the piece, then one must lower half-mold 'till having it matched the one 2). This matching position is made easier and secured since some raw material go and place themselves automatically in expansion chamber 3) hence its top level finds itself as much automatically below the top board of the half-mold 2) and consequently half-mold 6) goes and lies itself perfectly on that 2).

When matching is accomplished, one has to lock the two half-molds together by pins 13) or by brackets 15). Then one must deliver pressure to jack 5) which compels piston 4), lying in its bottom dead center, to rise upwards, so that also the portion of product which, in consequence of temperature too, had entered the chamber 3), is caused to go back into the mold natural cavity, 'till compressing the product to the preset specific pressure.

At this point, the normal waiting time being elapsed, one must take half-mold 6) away from the one 2) and remove piece by hand or cause strippers 10) to intervene by compelling the piece to exit, while piston 4) comes back 'till reaching its home position.

Practically, aforesaid steps go on automatically through common technical automatisms.

Once the finished piece has been drawn, the operator will find on the same, corresponding to the piston 4), a clear and visible impression left by the piston itself.

If it will turn out to be negative, this will exhibit the fact that initial raw material amountwas more or less short; if on the contrary impression will turn out to be positive it will be in evidence that raw material quantity was greater than the one being necessary.

Thus, for next piece to obtain, in the first case the operator will add a little more raw material, while in the second case he will reduce quantity.

By means of few preproduction tests, thus the operator will find quantity fit to the end and anyhow he will always be able, during mass-production too, to check individual pieces and see whether, for any reason, there are some changes, thus taking action timely, by adding or removing some raw material, where impression, whether negative or positive, oversteps tolerance limits.

In case negative impression is too deep, he not only will realize immediately that some product must be added, but he will also reject the piece owing to its turning out to be faulty in thickness on the specific site and maybe because of a possible lack of compression,too.

This method not only allows securing reliable production, with very limited wastes and greater final productiveness but it also allows to accomplish much more simple molds and presses requiring operation power much lower than the one presently necessary, being these presses achievable also by less heavy and cheap structure.

As a matter of fact, turning the compression site into a very small surface, or at any rate much smaller than the one presently concerned, allows using thrust jacks with much more moderate power, no thrusting force being necessary to preserve the two half-molds matched since this function is fulfilled by pins 13) or by brackets 15) or by any other corresponding means.

Illustrated in an application to lower half-mold, one will be able to practically apply this invention to upper half-molds and, wherever this invention is applied, one will be able to realize also presses by several individual and independent molds or by multiple mold.

This invention is suitable for preexisting presses too, in which the system presently used both for product compression and for mold matching is only employed as back thrust element against pressure arising from piston 4) at the time of compression, namely to only preserve molds matching position.

It is a matter of course that through this invention one can make use of already existing molds too, in one of the two of which expansion chamber 3) will be obtaining, this one being another great advantage of this invention.

Furthermore, one will be able to usefully employ this in vention for all those products having  features
and conversion technology similar to those of above-
mentioned products.

C L A I M S

1) Compression molding method for thermosetting resins, and elastomers in general as well as natural rubber, with or without inserts, characterized in that, after having inserted raw materials into lower half-mold, it consists in:
   - having the two half-molds matched and keeping them matched in this way 'till the end of production run;
   - allowing raw materials, preferably only a portion of them, to house into one additional cavity at least being directly connected with corresponding half - mold natural cavity;
   - operating compression pressure only on raw materials lying in said cavity, or additional chamber.

2) Method as per claim 1), characterized in that the two half-molds matching is preserved by the two half-molds hooking together, through pins or similar for instance.

3) Method as per previous claims, characterized in that compression pressure on the portion of raw materials contained in additional cavity is obtained through a thrust element, such as piston sliding ermethically in the cavity itself.

4) Method as per previous claims, characterized in that in a variant suitable for the application of this method to preexisting conventional presses, the two half-molds matching can occur, instead of through the two half-molds clamping together, by means of the common system being used for the product compression, this system being however employed only as back thrust element against pressure operating in supplementar cham-

- 2 -

0066666

ber.

5) Molds accomplished to carry into effect the method as per previous claims.

6) Presses accomplished according to the method as per previous claims.

**fig.1**

**fig.2**

fig.4

fig.3

fig.5          fig.6          fig.7

0066666